# EUROPEAN PATENT SPECIFICATION

(11) **EP 1 429 968 B1**
(45) Date of publication and mention of the grant of the patent: **26.04.2006**
(21) Application number: 02732216.3
(22) Date of filing: 05.06.2002
(51) Int. Cl.: B65D 1/12, B65D 25/14, B65D 85/72, B65D 79/00, B65B 31/02, B32B 15/08, B21D 51/26, B67C 3/02, B67C 3/00, C12G 1/00

(54) **PROCESS FOR PACKAGING WINE IN ALUMINIUM CANS**
VERFAHREN ZUR VERPACKUNG VON WEIN IN ALUMINIUMDOSEN
PROCEDE D'EMBALLAGE DE VIN DANS DES BOITES ALUMINIUM

(30) Priority: 28.09.2001 AU PR800101
(43) Date of publication of application: 23.06.2004
(73) Proprietor: Barokes Pty Ltd., South Melbourne 3205, Victoria (AU)
(72) Inventor: STOKES, Gregory, John Charles, Keilor, Victoria 3036 (AU); BARICS, Steven, John Anthony, Tullamarine, Victoria 3043 (AU)
(74) Representative: Andrae, Steffen
(86) International application number: PCT/AU2002/000725
(87) International publication number: WO 2003/029089

(56) References cited:
- AU-A- 6 301 086
- PATENT ABSTRACTS OF JAPAN & JP 62 014 777 A (MIYAZAKI SHUNZO) 23 January 1987
- DATABASE WPI Derwent Publications Ltd., London, GB; AN 1987-104919, XP002985173 & JP 62 052 048 A (HOKKAI SEIKAN KK) 06 March 1987
- DATABASE WPI Derwent Publications Ltd., London, GB; AN 1987-226531, XP002985174 & JP 62 152 744 A (HOKKAI SEIKAN KK) 07 July 1987
- DATABASE WPI Derwent Publications Ltd., London, GB; Class A92, AN 1997-293141/27, XP002985175 & JP 9 108 756 A (NIPPON STEEL CORP) 28 April 1997
- CHURCH FRED L.: 'Next aluminium target: Cans for wine, water, juices' MODERN METALS vol. 36, no. 12, 1981, page 28, 30, 32 AND 34, XP002987675

## Description

### Technical Field

This invention relates to a process for packaging wine in aluminium cans. It also relates to aluminium cans filled with wine according to the process of the invention.

### Background of the Invention

Wine has been produced since the times of the ancient Greeks. It has been stored in many types of containers. These have included timber, pottery and leather. The use of glass bottles has evolved as the preferred storage means for wine, particularly when stored in quantities less than one litre. While bottles are almost universally used they have the disadvantages of having relatively high weight and being relatively fragile.

For beverages other than wine, such as beer and soft drinks, alternative packages such as metal cans and polyethylenetetraphthate (PET) bottles have been widely adopted. These offer advantages of lower weight and greater resistance to breakage. It has been proposed to store wine in such alternative containers. However, attempts to use such packaging types for wine have been generally unsuccessful. Some very low quality wines are stored in polyvinyl chloride containers. It is believed that the reasons for this lack of success has been the relatively aggressive nature of the materials in wine and the adverse effects of the reaction products of wine and the container on the wine quality, especially taste. Wine is a complex product that typically has a pH in the range 3 to 4. This compares to beer with a pH of 5 or more and many soft drinks with pH 3 or more. However, pH itself is not the sole determinant and it has been found that carbonated cola drinks with a pH as low as 3 may be adequately stored in PET containers. The low pH is the result of the phosphoric acid content in carbonated cola drinks. This may allow the satisfactory use of precoated aluminium cans and PET bottles for these beverages.

The WPI abstract 1987-060422 discloses wine containing 300 ppm or less sulphite, which is pached in metal cans.

It would be desirable to package wine in aluminium cans whereby the quality of the wine does not deteriorate significantly on storage.

### Summary of the Invention

This invention provides in one form a process for packaging wine in two-piece aluminium cans including the steps of:
preparing wine characterised in that it has less than 35 ppm of free SO₂, less than 300 ppm of chloride and less than 800 ppm of sulfates;
filling a two piece aluminium can body with the wine and sealing the can with an aluminium closure such that the pressure within the container is at least 1.72 bar (25 psi) and wherein the inner surface of the aluminium is coated with a corrosion resistant coating.

Preferably the wine is further characterised by having total sulfur dioxide levels less than 250 ppm, and more preferably 100 ppm.

Preferably the wine is further characterised by having total nitrites less than I ppm, total nitrates less than 30 ppm, total phosphates less than 900 ppm and acidity calculated as tartaric acid in the range 6g/litre to 9g/litre.

Preferably the wine is chilled before filling.

Preferably the corrosion resistant coating is a thermoset coating.

Preferably the headspace after sealing with the closure has the composition nitrogen 80-97% v/v, and carbon dioxide 2-20% v/v.

Alternatively the wine is carbonated before the two piece can body is filled with the wine whereby the headspace after sealing is predominantly carbon dioxide.

Preferably the maximum oxygen content of the headspace is 1% v/v.

Preferably liquid nitrogen is added just prior to the seaming of the closure to the body of the can.

Preferably the headspace for a 330 millilitre can is in the range 2-5mm.

### Detailed Description of the Invention

The wine required for the process of the present invention may be prepared by the use of particular viticulture and wine making techniques as are described below. Alternatively the wine may be prepared by treating wine with higher than specified levels of constituents and removing or lowering the content of these constituents to those required for the present invention. In this invention the term "wine" is used quite broadly and includes still and sparkling wine as well as fortified wines and wines blended with mineral waters and fruit juices.

With regard to viticulture the absence of undesired materials may be obtained by ensuring adverse chemical sprays are not used. The use of chemical sprays needs to be monitored as this also affects the total build up of undesired chemicals in the final wine product. Most vine diseases need heat or humidity to flourish, unpruned vines enhances this dilemma further creating the need for chemical spraying.

Shade has a major role in producing grape quality, a higher incidence of botrytis, powdery mildew and down mildew. Once again this requires chemical intervention. Sulfur based fungicides can be used but they introduce unacceptable levels of sulfur. Unpruned vines have bunches which produce soggy wine with excessive herbaceous and abhorrent flavours. Light is one of the greatest natural assets, too often forgotten and taken for granted. The focus must be "a vine in harmonious balance" within itself. With the correct ratio of grapes, leaves, canes, wood and roots within this balance occurring, minimal chemical intervention is required.

Excessive irrigation's legacy is an "out of balance" crop. A crop where there is a far too abundant canopy produces shaded fruit and in turn late ripening. Also excessive irrigation prior to harvest overloads the berry with water and chemical uptake, which alters the berry's natural state. Again this often requires a chemical counter measure further down the processing line. Drip irrigation with a constant electronic soil moisture monitor is the preferred option.

Preferably grapes will be hand picked (with careful attention not to excessively damage the fruit) and should be harvested in a cool (8°C-16°C) environment, preferably at night. Baume in the 13.0-14.0 range with pH 3.1-3.8 for "reds" and 10.0-13.0 Baume and pH 3.0-3.5 for "whites". Minimal sulfur dioxide dusting is required so as to minimise wild yeast degradation. It is preferred to rely upon the wild yeasts for fermentation.

For red wines crushing and de-stemming should occur as soon as possible and preferably within 12 hours of harvesting. De-stemming before crushing is highly recommended so as to produce a higher quality wine. The advantages are an improvement in taste by not containing astringent, leafy herbaceous stems. Possible alcoholic strength increases, by as much as 0.5%, because the stems which contain water and no sugar, absorb alcohol. An increase in colour occurs by avoiding the pigments in the stems. Fermentation with stems allows for more oxygen intake at an accelerated process. We do not require speed when fermenting, only stability and quality. After de-stemming and crushing the must is pumped to a fermentation vessel, adjusted with tartaric acid, yeast levels adjusted to requirements and a minimum sulfur dioxide addition.

The vessel is fitted with a bubble system so as to allow excessive fermentation gases out, and no oxygen in. Oxygen entry occurs only when punching occurs. This amount of aeration is important for yeast multiplication and complete sugar fermentation.

Punching down the skins (every 10-12 hours) at regular intervals and maintaining an ambient temperature of approximately 25°C is crucial in the fermentation process. Dry-cap can allow oxidisation and higher or lower temperatures create their own nemesis on the fermenting juice. Stability during maceration being the key element during the next 14-21 days. Baume is constantly monitored with a daily reduction of 0.7-1.0 Baume being the "benchmark". When the Baume reaches 0°-1° the pomace or grape mass is "basket pressed".

Pressing requires careful and astute monitoring. Over-pressing creates heavy astringents, phenolics and heavy coarse tannins. Balance pressing alleviates the need for eventual heavy chemical fining, unnecessary blending and chemical intervention.

At this stage the combination of free run juice and pressed juice is transferred to pre-sulfited, sterilised used or new American Oak, French Oak stored in a naturally controlled temperature environment. The temperature range is 15°C - 25°C. After filling, the barrels are hit a few times with a rubber mallet to dislodge air bubbles and refilled to within 25mm of the barrel opening. The barrels are fitted with an air lock and the fermentation is allowed to proceed within the barrel. This process takes 3-4 months to complete (the time factor dependent on the humidity and temperature variations in the host environment). About this stage malo-lactic fermentation occurs, either by inoculation or naturally if it is endemic in the winery.

After fermentation is complete the barrel is racked, cleaned, sterilised, lightly sulfited, filled and air locks removed. After filling, the barrels are hit a few times with a rubber mallet to dislodge air bubbles, refilled and bunged. The barrel then positioned with the bung at 30° to the vertical.

Sediment needs to be removed from young wine so that yeast cells, bacteria cells and foreign organic substances which create putrid, reduced and hydrogen sulfite can be avoided.

Aeration is another natural progression in our quest for excellence. This factor facilitates the completion of yeast transformation and the eventual stability of the wine. Within the fermentation medium, different areas of sedimentation occurs, dictating free sulfur dioxide levels to form. Racking synergises these layers into conformity. Sulfiting requirements at this stage are thus more precise.

Frequency of racking is a contentious issue, a time frame of every two to three months in the first year is quite acceptable although in reality factors such as the size of the tank or barrel, temperatures in the cellars and type of wine will dictate the cellarmaster's decision. His skill and experience will determine the final requirements. Egg white fining at the rate of 1-3 per 100 litres is required to enhance the settling of the suspended material.

After ageing in casks for 12-18 months, racking at least 3-4 times, analysing, tasting, lightly sulfiting, (if 100% necessary) acknowledging the wine is sound, free from fermentable sugars and has completely undergone malo-lactic fermentation the wine is ready for blending. This is the final reward for the efforts put forth in the preceding 12-18 months and the months leading up to harvest.

For white wine the grapes are de-stemmed before crushing. The pH of the juice adjusted to pH 3.0-3.4 with tartaric acid. Skin contact time dependent on grape variety, sourcing region, ambient temperature and the quantity of tannins or astringent phenolic requirements. The must drained under carbon dioxide addition.

Fermentation temperature is in the range 10-16°C. A sugar content reduction of between 0.4 and 0.8 Baume is the goal. After fermentation, the wine settling and racked under carbon dioxide, sulfur dioxide addition occurs.

In all procedures pertaining to white wine, exposure to air is to be avoided at all costs, and a cool temperature environment is practised. Wine prepared as described above has a free sulfur dioxide level less than 35 ppm and a total sulfur dioxide level less than 250 ppm. The level of anions that may form acids, chlorides, nitrates and sulfates are less than the prescribed maxima.

The invention may also be applied to sparkling wine where nitrogen may not be required in the headspace as the carbon dioxide may be sufficient to provide the required can strength.

The two piece cans suitable for the present invention are cans that are currently used for soft drink and beer beverages. The can linings are also similar and are typically an epoxy resin combined with a formaldehyde based crosslinking agent. Typically the film thickness used is greater than that used for beer or soft drinks. Typically 175 mg/375 ml cans have been found to lead to a suitable film thickness. The internally coated can is baked at temperatures typically in the range 165-185°C for twenty minutes. It is important to ensure a well cross linked impermeable film to ensure excessive levels of aluminium are not dissolved into the wine on storage.

The can filling process involves the addition of approximately 0.1 ml of liquid nitrogen just prior to seaming the closure of the body. The internal pressure in the can is approximately 1.72-2.76 bar (25-40 psi.).

Alternatively the wine can be carbonated by mixing the wine with carbon dioxide gas in equipment known as a carbonator. This type of equipment is well known and is extensively used in the soft drink industry.

As previously discussed, the storage stability of the wine in the aluminium can is vital. In contrast to bottled wine where the headspace includes oxygen, the headspace in the cans of the present invention have very low levels of oxygen. This means the wine does not "age" on storage. For test purposes, the packaged wine is stored under ambient conditions for a period of 6 months and at 30°C for 6 months. 50% of the cans are stored upright and 50% are inverted.

The product is checked at 2 monthly intervals for A1, pH, °Brix, headspace oxygen and visual inspection of the cans, 6 cans inverted and 6 cans upright per variable. Visual inspection includes lacquer conditions, staining of the lacquer and seam condition. Samples are to be retained for 12 months. Sensory evaluation uses a recognised objective system by a tasting panel.

Results for storage evaluation of a white wine are set out in Table 1. A white wine has a lower pH on average than a red wine and is more severe test on storage stability.

**Table 1**

| | | | | |
|---|---|---|---|---|
| **Storage** | **°Brix (20°C)** | **Orientation** | **Al mg/L** | **pH** |
| Initial | 6.7 | - | 0.5 | . 3.40 |
| 3 months | 6.9 | Upright | 0.65 | 3.47 |
| 3 months | 6.5 | Inverted | 0.68 | 3.47 |
| 6 months | 7.0 | Upright | 0.72 | 3.49 |
| 6 months | 7.0 | Inverted | 0.68 | 3.50 |

This data shows satisfactory storage after six months at 30°C. The acceptable quality of the wine was confirmed by the tasting panel.

## Claims

1. A process for packaging wine in two-piece aluminium cans including the steps of:
preparing wine **characterised in that** it has less than 35 ppm of free SO₂, less than 300 ppm of chloride, and less than 800 ppm of sulfates;
filling a two-piece aluminium can body with the wine and sealing the can with an aluminium closure such that the pressure within the can is at least 1,72 bar (25 psi) and wherein the inner surface of the aluminium is coated with a corrosion resistant coating.

2. A process as defined in claim 1, wherein the wine is further **characterised by** having total sulfur dioxide levels less than 250 ppm.

3. A process as defined in claim 1 or 2, wherein the wine is further **characterised by** having total sulfur dioxide levels less than 100 ppm.

4. A process as defined in any one of claims 1 to 3, wherein the wine is further **characterised by** having total nitrites less than 1 ppm, total nitrates less than 30 ppm, total phosphates less than 900 ppm and acidity calculated as tartaric acid in the range 6g/litre to 9g/litre.

5. A process as defined in any one of claims 1 to 4, wherein the wine is chilled before filling.

6. A process as defined in any one of claims 1 to 5, wherein the corrosion resistant coating is a thermoset coating.

7. A process as defined in any one of claims 1 to 6, wherein the headspace after sealing with the closure has the composition nitrogen 80-97 % v/v, and carbon dioxide 2-20 % v/v.

8. A process as defined in any one of claims 1 to 6, wherein the wine is carbonated before the two-piece can is filled with the wine whereby the headspace after sealing is predominantly carbon dioxide.

9. A process as defined in any one of claims 1 to 8, wherein the headspace for a 330 mililitre can is in the range 2-5 mm.

10. A filled wine can prepared by a process as defined in any one of claims 1 to 9.

11. A filled wine can as defined in claim 10, wherein the wine is a still red wine.

12. A filled wine can as defined in claim 10, wherein the wine is a still white wine.

13. A filled wine can as defined in claim 10, wherein the wine is carbonated red wine.

14. A filled wine can as defined in claim 10, wherein the wine is carbonated white wine.

## Patentansprüche

1. Verfahren zur Verpackung von Wein in zweiteiligen Aluminiumdosen, das die Schritte beinhaltet:
Herstellen eines Weins, der **dadurch gekennzeichnet ist, daß** er weniger als 35 ppm freies SO₂, weniger als 300 ppm Chlorid und weniger als 800 ppm Sulfate enthält;
Befüllen des Körpers einer zweiteiligen Aluminiumdose mit dem Wein und Versiegeln der Dose mit einem Aluminiumverschluß, so daß der Druck innerhalb des Behälters wenigstens 1,72 bar (25 psi) beträgt, und wobei die Innenoberfläche des Aluminiums mit einer korrosionsbeständigen Beschichtung überzogen ist.

2. Verfahren nach Anspruch 1, wobei der Wein außerdem **dadurch gekennzeichnet ist, daß** er einen Gesamtschwefeldioxidgehalt von weniger als 250 ppm aufweist.

3. Verfahren nach Anspruch 1 oder 2, wobei der Wein außerdem **dadurch gekennzeichnet ist, daß** er einen Gesamtschwefeldioxidgehalt von weniger als 100 ppm aufweist.

4. Verfahren nach irgendeinem der Ansprüche 1 bis 3, wobei der Wein außerdem **dadurch gekennzeichnet ist, daß** er Gesamtnitrite von weniger als 1 ppm, Gesamtnitrate von weniger als 30 ppm, Gesamtphosphate von weniger als 900 ppm sowie eine Säure, berechnet als Weinsäure, im Bereich von 6 g/l bis 9 g/l aufweist.

5. Verfahren nach irgendeinem der Ansprüche 1 bis 4, wobei der Wein vor der Abfüllung gekühlt wird.

6. Verfahren nach irgendeinem der Ansprüche 1 bis 5, wobei die korrosionsfeste Beschichtung eine thermisch gehärtete Beschichtung ist.

7. Verfahren nach irgendeinem der Ansprüche 1 bis 6, wobei der Kopfraum nach dem Versiegeln mit dem Verschluß die Zusammensetzung Stickstoff 80 bis 97 Vol.-% und Kohlendioxid 2 bis 20 Vol.-% aufweist.

8. Verfahren Anspruch nach irgendeinem der Ansprüche 1 bis 6, wobei der Wein mit Kohlensäure versetzt wird, bevor die zweiteiligen Dose mit dem Wein befüllt wird, wodurch der Kopfraum nach dem Versiegeln überwiegend Kohlendioxid ist.

9. Verfahren nach irgendeinem der Ansprüche 1 bis 8, wobei der Kopfraum für eine 330 ml Dose im Bereich von 2 bis 5 mm liegt.

10. Gefüllte Weindose, die nach einem Verfahren hergestellt wurde, wie es in irgendeinem der Ansprüche 1 bis 9 definiert ist.

11. Gefüllte Weindose nach Anspruch 10, wobei der Wein ein ruhiger Rotwein ist.

12. Gefüllte Weindose nach Anspruch 10, wobei der Wein ein ruhiger Weißwein ist.

13. Gefüllte Weindose nach Anspruch 10, wobei der Wein ein mit Kohlensäure versetzter Rotwein ist.

14. Gefüllte Weindose nach Anspruch 10, wobei der Wein ein mit Kohlensäure versetzter Weißwein ist.

## Revendications

1. Procédé de conditionnement de vin dans des boîtes en aluminium en deux pièces, qui comprend les étapes qui consistent à :
préparer un vin **caractérisé en ce qu'**il contient moins de 35 ppm de SO₂ libre, moins de 300 ppm de chlorure et moins de 800 ppm de sulfates,
remplir de vin un corps de boîte en aluminium en deux pièces et sceller la boîte à l'aide d'une fermeture en aluminium de telle sorte que la pression à l'intérieur de la boîte soit d'au moins 1,72 bar (25 psi), la surface intérieure de l'aluminium étant revêtue d'un revêtement qui résiste à la corrosion.

2. Procédé selon la revendication 1, dans lequel le vin est en outre **caractérisé en ce que** son niveau total de dioxyde de soufre est inférieur à 250 ppm.

3. Procédé selon les revendications 1 ou 2, dans lequel le vin est en outre **caractérisé en ce que** sa teneur totale en dioxyde de soufre est inférieure à 100 ppm.

4. Procédé selon l'une quelconque des revendications 1 à 3, dans lequel le vin est en outre **caractérisé en ce que** son niveau total de nitrites est inférieur à 1 ppm, son niveau total de nitrates est inférieur à 30 ppm, son niveau total de phosphates inférieur à 900 ppm et son acidité calculée en tant qu'acide tartrique dans la plage de 6 g/litre.

5. Procédé selon l'une quelconque des revendications 1 à 4, dans lequel le vin est refroidi avant le remplissage.

6. Procédé selon l'une quelconque des revendications 1 à 5, dans lequel le revêtement résistant à la corrosion est un revêtement thermodurcissable.

7. Procédé selon l'une quelconque des revendications 1 à 6, dans lequel l'espace libre après scellement avec la fermeture a pour composition 80 à 97 % en volume d'azote et 2 à 20 % en volume de dioxyde de carbone.

8. Procédé selon l'une quelconque des revendications 1 à 6, dans lequel le vin est gazéifié avant de remplir la boîte en deux pièces avec le vin, grâce à quoi après scellement, l'espace supérieur est principalement constitué de dioxyde de carbone.

9. Procédé selon l'une quelconque des revendications 1 à 8, dans lequel l'espace supérieur d'une boîte de 330 millilitres est dans la plage de 2 à 5 mm.

10. Boîte remplie de vin et préparée par un procédé selon l'une quelconque des revendications 1 à 9.

11. Boîte remplie de vin selon la revendication 10, dans laquelle le vin est un vin rouge non pétillant.

12. Boîte remplie de vin selon la revendication 10, dans laquelle le vin est un vin blanc non pétillant.

13. Boîte remplie de vin selon la revendication 10, dans laquelle le vin est un vin rouge pétillant.

14. Boîte remplie de vin selon la revendication 10, dans laquelle le vin est un vin blanc pétillant.
